# EUROPÄISCHE PATENTSCHRIFT

(11) **EP 0 958 998 B1**
(45) Veröffentlichungstag und Bekanntmachung des Hinweises auf die Patenterteilung: **20.08.2003**
(21) Anmeldenummer: 98124209.2
(22) Anmeldetag: 17.12.1998
(51) Int. Cl.: B62K 25/08

(54) **Führung für das Vorderrad eines Motorrades**
Guide for the front wheel of a motorcycle
Guide pour la roue avant d'une motocyclette

(30) Priorität: 20.05.1998 DE 19822730
(43) Veröffentlichungstag der Anmeldung: 24.11.1999
(73) Patentinhaber: Bayerische Motoren Werke Aktiengesellschaft, 80788 München (DE)
(72) Erfinder: Seidl, Josef, 84130 Dingolfing (DE)

(56) Entgegenhaltungen:
- DE-A- 3 703 736
- DE-A- 4 110 954
- DE-C- 906 180

## Beschreibung

Die Erfindung betrifft eine Führung für das Vorderrad eines Motorrades, umfassend eine Kugelgelenkgabel, die mit dem Fahrzeugrahmen dreh- und schwenkbar verbunden ist, ein Führungselement, das mit dem Fahrzeugrahmen und über ein Kugelgelenk mit einer unteren Gabelbrücke verbunden ist, und Federelemente, die sich an einem beweglichen Teil der Führung und am Fahrzeugrahmen abstützen.

Eine Führung dieser Gattung ist in der DE 41 10 954 A1 beschrieben. Bei dieser bekannten Führung ist das Führungselement als Längslenker ausgebildet, der am hinteren Ende mit dem Fahrzeugrahmen um eine Querachse schwenkbar verbunden ist.

Bei einer derartigen Führung bewegt sich die vordere Lagerstelle des Längslenkers, nämlich das Kugelgelenk an der unteren Gabelbrücke beim Einfedem des Vorderrades auf einem Kreisbogen um die hintere Lagerstelle des Längslenkers. Die Bewegungsbahn des Kugelgelenks hat daher eine Horizontalkomponente, die vom Schwenkwinkel des Längslenkers abhängt. Der Umstand, daß sich diese Horizontalkomponente beim Einfedern des Vorderrades verändert, ist für das Federungsverhalten jedoch nachteilhaft. Es wurde daher versucht, den Längslenker möglichst lang auszubilden, damit der Radius der Bewegungsbahn seiner vorderen Lagerstelle möglichst groß und deren Krümmung demzufolge möglichst gering ist. Der Länge des Längslenkers sind aber konstruktive Grenzen gesetzt, insbesondere dann, wenn sich der Motor weit nach vorne erstreckt.

Der Erfindung liegt die Aufgabe zugrunde, die gattungsgemäße Führung dahingehend weiterzubilden, daß sich beim Einfedern eine optimale Bewegungsbahn des Kugelgelenks der unteren Gabelbrücke erzielen läßt.

Erfindungsgemäß wird diese Aufgabe dadurch gelöst, daß das Führungselement als ein zentrales Führungselement mit linearer Führungsfunktion ausgebildet und am Vorderrahmen des Motorrades starr befestigt ist.

Bei der erfindungsgemäßen Führung ist ein Längslenker entbehrlich. Die mit der Entwicklung, Lagerhaltung und Montage dieses Bauteils verbundenen Kosten entfallen daher. Ein weiterer Vorteil besteht in der Gewichtsersparnis. Durch die Wahl der Neigung des zentralen Führungselements läßt sich die Bewegungsbahn des an der unteren Gabelbrücke befestigten Kugelgelenks beeinflussen, und es kann eine Bewegungsbahn erzielt werden, für die beim Stand der Technik ein Längslenker von beträchtlicher Länge erforderlich wäre. Die erfindungsgemäße Führung ist auch bei beengten Raumverhältnissen anwendbar, beispielsweise bei einem Motorrad mit weit nach vorne ragendem Motor. Das zentrale Führungselement ist zur Einstellung der Federung und der Dämpfung gut zugänglich, und die Fahrwerksdaten und die kinematischen Eigenschaften können ohne größeren Einfluß auf das Restfahrzeug verändert werden.

Die Federelemente sind vorzugsweise in das zentrale Führungselement eingebaut.

Die Erfindung kann in der Weise verwirklicht werden, daß die Kugelgelenkgabel längenkonstant ausgebildet und mit einer oberen Gabelbrücke schwenkbar und axial verschiebbar verbunden ist. Bei einer solchen Ausbildung der Führung können die Federelemente oder zusätzliche Federelemente als Schraubendruckfedern ausgebildet sein, die sich an der oberen Gabelbrücke und an der Kugelgelenkgabel abstützen.

Die Erfindung kann aber auch in der Weise verwirklicht sein, daß die Kugelgelenkgabel als Teleskopgabel ausgebildet ist und daß die untere Gabelbrücke die beiden Gleitrohre miteinander verbindet.

Drei Ausführungsbeispiele der Erfindung sind in den Zeichnungen dargestellt und werden nachfolgend näher erläutert. Es zeigt:
Fig. 1 eine schematische Darstellung einer ersten Ausführungsform der Führung des Vorderrades eines Motorrades,
Fig. 2 eine schematische Darstellung einer zweiten Ausführungsform einer Vorderradführung, und
Fig. 3 eine schematische Darstellung einer dritten Ausführungsform einer Vorderradführung.

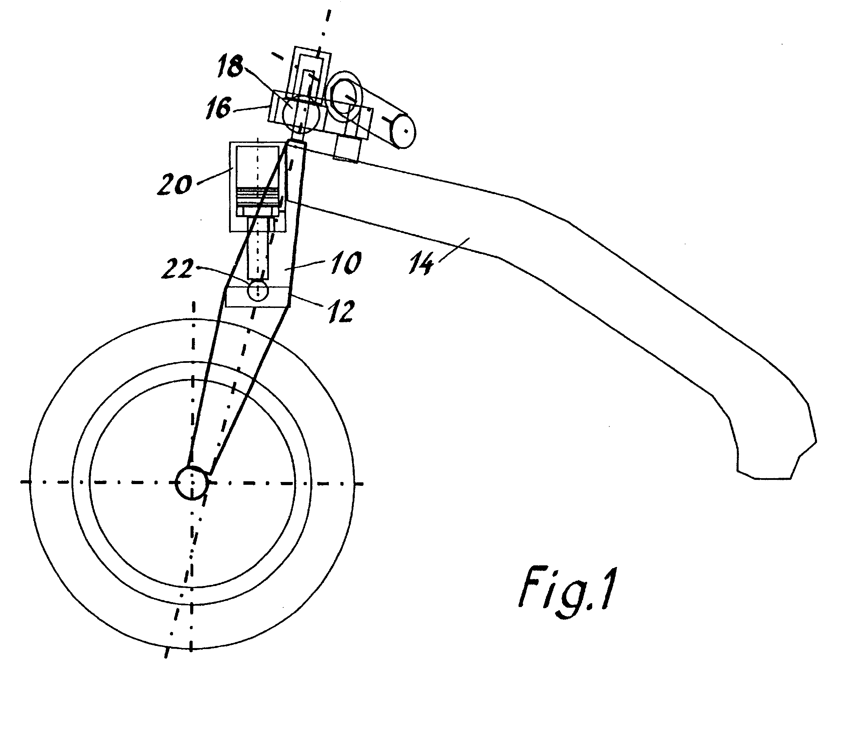

In Fig. 1 ist ein als Kugelgelenkgabel ausgebildeter Radträger dargestellt, der aus zwei längenkonstanten Holmen 10 besteht, die durch eine untere Gabelbrücke 12 miteinander verbunden sind. Das obere Ende jedes Holms 10 ist mit einer oberen Gabelbrücke 16 axial verschiebbar und schwenkbar verbunden. Die obere Gabelbrücke 16 ist ihrerseits mit einem Vorderrahmen 14 des Motorrades schwenkbar verbunden. Bei der in Fig. 1 gezeigten Ausführungsform ist das obere Ende jedes Holms 10 in einem Kugelgelenk 18 gelagert. Anstelle eines Kugelgelenks könnte aber auch ein Gummigelenk verwendet werden, das einen rotatorischen Freiheitsgrad besitzt. Am Vorderrahmen 14 ist ein als Federbein 20 ausgebildetes zentrales Führungselement starr befestigt, das mit einem an der unteren Gabelbrücke 12 angebrachten Kugelgelenk 22 verbunden ist. Dieses zentrale Führungselement kann Querkräfte aufnehmen, und es gewährleistet eine zu seiner Längsachse parallele geradlinige Bewegungsbahn des Kugelgelenks 22. In das Federbein 20 sind Federelemente eingebaut, bei denen es sich um mechanische, pneumatische oder hydraulische Federelemente handeln kann. Die pneumatischen oder hydraulischen Federelemente können zugleich eine Dämpfung der Federbewegung bewirken.

Beim Einfedern des Vorderrades bewegen sich die beiden Holme 10 nach oben, wobei ihre oberen Enden in den beiden oberen Kugelgelenken 18 axial verschiebbar geführt sind. Die untere Gabelbrücke 12 bzw. das daran befestigte Kugelgelenk 22 ist in einer zur Längsachse des Federbeins 20 parallelen Richtung geführt. Der Axialbewegung der beiden Holme 10 in den oberen Kugelgelenken 18 wird daher eine Schwenkbewegung überlagert.

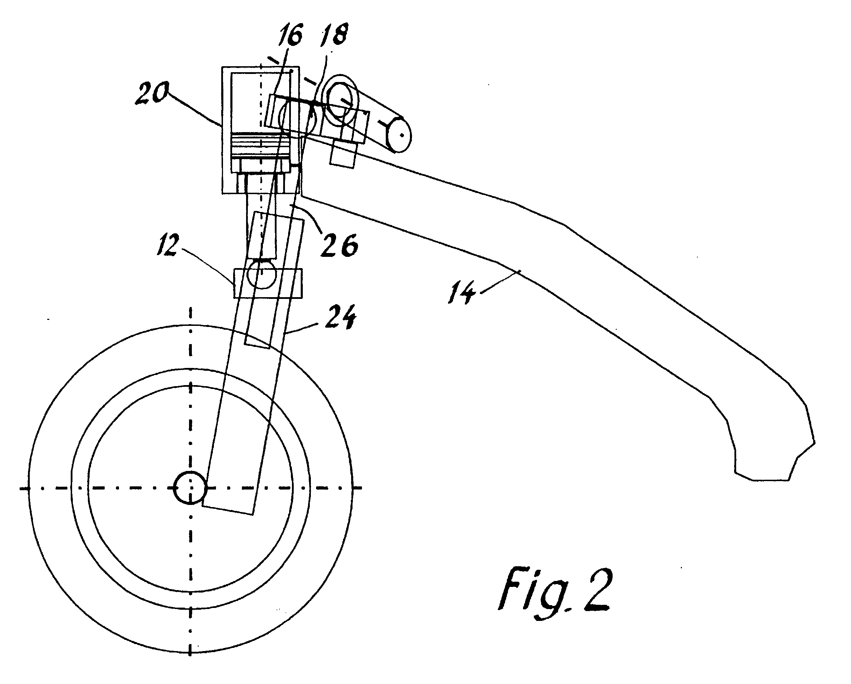

Bei der in Fig. 2 dargestellten Ausführungsform ist der Radträger als Teleskopgabel ausgebildet, d. h. der längenkonstante Holm 10 der ersten Ausführungsform ist durch ein Gleitrohr 24 und ein Standrohr 26 ersetzt. Die Ausbildung einer solchen Teleskopgabel ist in der eingangs erwähnten DE 41 10 954 A1 ausführlich beschrieben. Das Gleitrohr 24 ist auf dem Standrohr 26 axial verschiebbar geführt. Bei dieser Ausführungsform ist jedes Standrohr 26 mit der oberen Gabelbrücke 16 axial fest, aber schwenkbar verbunden. Bei dem gezeigten Ausführungsbeispiel ist diese Gelenkverbindung 18 als Kugelgelenk ausgeführt, es könnte sich aber auch um ein Gummigelenk handeln. Die mit den beiden Gleitrohren 24 verbundene Gabelbrücke 12 ist ebenso wie bei der ersten Ausführungsform über ein Federbein 20 gegenüber dem Vorderrahmen 14 federnd abgestützt und zu einer vertikalen Bewegung geführt.

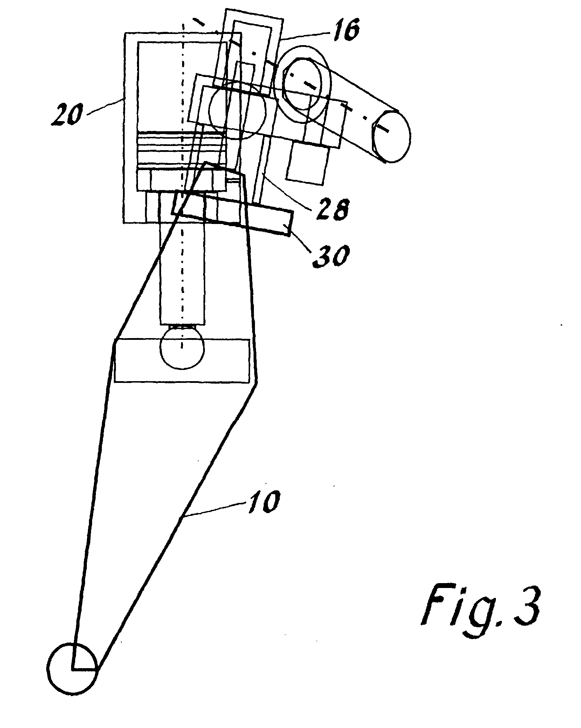

Die in Fig. 3 gezeigte Ausführungsform unterscheidet sich von der in Fig. 1 gezeigten Ausführungsform dadurch, daß jedem der beiden längenkonstanten Holme 10 der Kugelgelenkgabel eine Schraubendruckfeder 28 zugeordnet ist. Diese Schraubendruckfeder 28 stützt sich an der oberen Gabelbrücke 16 und an einer Ringschulter 30 des Holms 10 ab. Die beiden Holme 10 sind ebenso wie bei der ersten Ausführungsform durch eine untere Gabelbrücke verbunden, die über ein am Vorderrahmen befestigtes Federbein 20 zu einer vertikalen Bewegung geführt ist. Beim Einfedern des Vorderrades bewegen sich die beiden Holme 10 unter Kompression der zugeordneten Schraubendruckfedern 28 gegenüber der oberen Gabelbrücke 16 nach oben, wobei ihre oberen Enden in den zugeordneten Kugelgelenken axial verschiebbar und schwenkbar geführt sind.

Bei der in Fig. 3 gezeigten Ausführungsform kann das Federbein so ausgebildet sein, daß es ausschließlich eine Führungs- und Dämpfungsfunktion erfüllt, weil die Federfunktion von den beiden Schraubendruckfedern 28 übernommen wird. Dieser Gedanke könnte auch bei der in Fig. 2 gezeigten Ausführungsform verwirklicht werden, indem die Federelemente in den beiden Gleitrohren 24 angeordnet werden.

### Bezugszeichenliste:

- 10: Holme
- 12: untere Gabelbrücke
- 14: Vorderrahmen
- 16: obere Gabelbrücke
- 18: oberes Kugelgelenk
- 20: Federbein
- 22: unteres Kugelgelenk
- 24: Gleitrohr
- 26: Standrohr
- 28: Schraubendruckfeder
- 30: Ringschulter

## Patentansprüche

1. Führung für das Vorderrad eines Motorrades, umfassend eine Kugelgelenkgabel (10), die mit dem Fahrzeugrahmen (14) dreh- und schwenkbar verbunden ist, ein Führungselement (20), das mit dem Fahrzeugrahmen und über ein Kugelgelenk (22) mit einer unteren Gabelbrücke (12) verbunden ist, und Federelemente, die sich an einem beweglichen Teil der Führung und am Fahrzeugrahmen abstützen, **dadurch gekennzeichnet, daß** das Führungselement als ein zentrales Führungselement mit linearer Führungsfunktion (20) ausgebildet und am Vorderrahmen (14) des Motorrades starr befestigt ist.

2. Führung nach Anspruch 1, **dadurch gekennzeichnet, daß** die Federelemente in das zentrale Führungselement (20) eingebaut sind.

3. Führung nach Anspruch 1 oder 2, **dadurch gekennzeichnet, daß** die Kugelgelenkgabel (10) längenkonstant ausgebildet und mit einer oberen Gabelbrücke (16) schwenkbar und axial verschiebbar verbunden ist.

4. Führung nach Anspruch 3, **dadurch gekennzeichnet, daß** die Federelemente oder zusätzliche Federelemente als Schraubendruckfedern (28) ausgebildet sind, die sich an der oberen Gabelbrücke (16) und an der Kugelgelenkgabel (10, 30) abstützen.

5. Führung nach Anspruch 2, **dadurch gekennzeichnet, daß** die Kugelgelenkgabel als Teleskopgabel (24, 26) ausgebildet ist und daß die untere Gabelbrücke (12) die beiden Gleitrohre (24) miteinander verbindet.

## Claims

1. A guide for a front wheel of a motorcycle, comprising a ball-joint fork (10) rotatably and pivotably connected to the vehicle frame (14), a guide element (20) connected to the frame and to a bottom fork bridge (12) via a ball joint (22), and spring elements braced against the frame and against a movable part of the guide, **characterised in that** the guide element is central and comprises a linear guide component (20) and is rigidly secured to the front frame (14) of the motorcycle.

2. A guide according to claim 1, **characterised in that** spring elements are incorporated in the central guide element (20).

3. A guide according to claim 1 or claim 2, **characterised in that** the ball-joint fork (10) is of constant length and is connected to a top fork bridge (16) so as to be pivotable and axially movable.

4. A guide according to claim 3, **characterised in that** the spring elements or additional spring elements are in the form of helical pressure springs (28) which are braced against the top fork bridge (16) and against the ball-joint fork (10,30).

5. A guide according to claim 2, **characterised in that** the ball-joint fork is a telescopic fork (24, 26) and the bottom fork bridge (12) connects the two sliding tubes (24).

## Revendications

1. Guidage pour la roue avant d'une motocyclette, comprenant une fourche à articulation à rotule (10) qui est reliée au cadre (14) du véhicule de façon rotative et oscillante, un élément de guidage (20) qui est relié au cadré du véhicule et, par l'intermédiaire d'une articulation à rotule (22), à une traverse inférieure de fourche (12), et des éléments élastiques qui prennent appui sur une partie mobile du guidage et sur le cadre du véhicule,
**caractérisé en ce que**
l'élément de guidage est constitué par un élément de guidage central à fonction de guidage linéaire (20) et est fixé au cadre avant (14) de la motocyclette.

2. Guidage selon la revendication 1,
**caractérisé en ce que**
les éléments élastiques sont incorporés dans l'élément de guidage central (20).

3. Guidage selon la revendication 1 ou 2.
**caractérisé en ce que**
la fourche à articulation à rotule (10) est de longueur constante et reliée à une traverse supérieure de fourche (16) de façon oscillante ct mobile en translation axiale.

4. Guidage selon la revendication 3.
**caractérisé en ce que**
les éléments élastiques ou les éléments élastiques additionnels sont constitués par des ressorts de compression hélicoïdaux (28) qui prennent appui sur la traverse supérieure de fourche (16) et sur la fourche à articulation à rotule (10, 30).

5. Guidage selon la revendication 2,
**caractérisé en ce que**
la fourche à articulation à rotule (10, 30) est constituée par une fourche télescopique (24, 26), et la traverse inférieure de fourche (12) relie les deux tubes coulissants (24) l'un à l'autre.
